# EUROPÄISCHE PATENTSCHRIFT

(11) **EP 1 690 672 B1**
(45) Veröffentlichungstag und Bekanntmachung des Hinweises auf die Patenterteilung: **20.02.2013**
(21) Anmeldenummer: 05026543.8
(22) Anmeldetag: 06.12.2005
(51) Int. Cl.: B30B 1/40, B30B 15/00, B30B 1/26, B29C 65/00

(54) **Arbeitsstation mit einer gegenläufigen Hubbewegung zum Schliessen der Werkzeuge**
Operating station with strokes of opposite direction for closing the tools
Station d'opération avec des mouvements de levage en sens opposé pour fermer les outils

(30) Priorität: 14.02.2005 DE 102005006782
(43) Veröffentlichungstag der Anmeldung: 16.08.2006
(73) Patentinhaber: UHLMANN PAC-SYSTEME GmbH & Co. KG, 88471 Laupheim (DE)
(72) Erfinder: Laupheimer, Ulrich, 88433 Schemmerhofen (DE)
(74) Vertreter: Wächter, Jochen

(56) Entgegenhaltungen:
- EP-A- 0 445 898
- DE-A1- 2 047 215
- US-A- 4 012 977

## Beschreibung

Die Erfindung betrifft eine Arbeitsstation mit einem Stationsrahmen, in dem auf Führungssäulen eine Sockeltraverse sowie eine Deckeltraverse angeordnet sind.

Derartige Arbeitsstationen sind aus der Praxis bekannt, in denen Werkzeuge längs des Stationsrahmens verstellt werden, um Werkstoffe zu bearbeiten, die beispielsweise durch Folienbahnen gebildet sind, die zwischen den Werkzeugen hindurchgeführt werden. Um diese Folienbahnen zu bearbeiten, müssen die Werkzeuge verstellt werden. Eine derartige Arbeitsstation ist aus EP 0 445 898 A2 bekannt. Die darin offenbarte Presse weist einen Rahmen auf, in dem beidseitig des Werkstücks exzentergetriebene und aufeinander zu bewegbare Werkzeuge verschiebbar angeordnet sind. Bei Arbeitss tationen ist es wünschenswert, möglichst variable Verstellmöglichkeiten zu haben, ohne die Folienbahnförderstrecke zwischen den Werkzeugen beeinflussen zu müssen.

US 4 012 977 zeigt eine Stanze mit einer Rahmenanordnung aus einem Grundgerüst, einem Stanzwerkzeug und einem Mittel zum Gewichtsausgleich. Die lineare Bewegung der Rahmenanordnung wird hierbei durch einen Antrieb ermöglicht.

Der Erfindung liegt die Aufgabe zugrunde, eine Arbeitsstation der eingangs genannten Art so auszubilden, dass variable Verstellmöglichkeiten für die Sockeltraverse oder die Deckeltraverse gegeben sind.

Diese Aufgabe wird nach der Erfindung durch eine Arbeitsstation gemäß Anspruch 1 gelöst.

Eine derartige Arbeitsstation bietet den Vorteil, dass mit einem Antrieb sowohl eine Verstellung des Hubtisches als auch des Stationsrahmens erzielt wird, also ein Doppelhub realisiert ist, der die Verstellung der Werkzeuge relativ zu der Folienbahn vereinfacht.

Durch den Kurventräger wird erreicht, dass die Arbeitsstation nicht nur einen Doppelhub ausführen kann, sondern ein weiterer Hub ermöglicht wird, da durch die Verstellung des Kurventrägers mit der auf der Kurvenrolle abgestützten Steuerkurve erreicht ist, dass der Stationsrahmen in seiner Gesamtheit eine weitere Hubbewegung ausführen kann.

Dabei ist es vorteilhaft, wenn der Antrieb eine Exzenterwelle umfasst, auf der eine den Hubtisch tragende Pleuelstange angeordnet ist, da so in einfacher Weise aus der Drehbewegung der Exzenterwelle die Höhenverstellung des Hubtisches längs der Führungssäulen abgeleitet werden kann.

Der Doppelhub lässt sich dann in einfacher Weise dadurch erzielen, dass die Exzenterwelle in einer der beiden Sockeltraverse oder Deckeltraverse gelagert ist, und dass die Exzenterwelle eine Kurvenscheibe trägt, die gegenüber dem Stationsgestelle abgestützt ist. Das Stationsgestell gibt dabei das ortsfeste Koordinatensystem vor, demgegenüber die Bewegungen des Hubtisches und des Stationsrahmens ausgeführt werden.

Dabei ist die Kurvenscheibe so geformt, dass die Hubbewegung des Hubtisches und des Stationsrahmens gegenläufig ist, also die Bewegung der durch die Exzenterwelle angetriebenen Bauteile aufeinander zu erfolgt. Für Endlagen der Bewegung der Arbeitsstation können in der Kurvenscheibe Rastsitze beziehungsweise Ruheflächen ausgebildet sein

Um eine genau definierte Bewegung des Stationsrahmens zu erzielen, ist dem Stationsgestell eine Stützrolle zugeordnet, auf der die Kurvenscheibe aufliegt.

Weiterhin ist dem Stationsrahmen ein Gewichtsausgleich zugeordnet, um eine einfache Verstellung des Stationsrahmens nur durch das Ablaufen der Kurvenscheibe auf der Stützrolle sicher zu stellen. In einfacher Weise lässt sich ein Gewichtsausgleich dadurch erreichen, dass dieser durch eine Feder, vorzugsweise eine mechanische oder pneumatische oder hydraulische Feder, gebildet ist. Alternativ ist auch die Möglichkeit gegeben, dass der Gewichtsausgleich durch ein Gegengewicht gebildet ist.

Wiederum um eine genau definierte Bewegung zu erzielen, ist zwischen dem Stationsgestell und dem Stationsrahmen eine Linearführung ausgebildet, die vorzugsweise vierfach vorgesehen und paarweise der Deckeltraverse und der Sockeltraverse sowie dem Stationsgestell zugeordnet ist.

Zur Verstellung des Kurventrägers ist ein Pneumatikzylinder oder Hydraulikzylinder oder Linearmotor vorgesehen, um die Verstellung des Kurventrägers unabhängig von dem Antrieb für die Exzenterwelle realisieren zu können.

Vorteilhaft ist es, wenn ein Anschlagbolzen vorgesehen ist, der zur Begrenzung des Verschiebeweges des Kurventrägers in diesen Verschiebeweg reversibel verstellbar ist, so dass der Anschlagbolzen einen Anschlag für den Kurventräger darstellt, der eine genau definierte Lage der Steuerkurve an der Kurvenrolle bestimmt, so dass mit dem Anschlagbolzen der Absenkhub begrenzt werden kann auf eine Zwischenstellung.

Daher ist es günstig, wenn der Anschlagbolzen mehrfach vorgesehen ist in einer längs des Verschiebeweges verteilten Anordnung oder wenn der Anschlagbolzen längs des Verschiebeweges verstellbar ist, da so die Größe des durch den Anschlagbolzen bestimmten Hubes veränderbar ist und damit insgesamt mit der Arbeitsstation ein Vielfachhub realisiert werden kann.

Im folgenden wird die Erfindung an einem in der Zeichnung dargestellten Ausführungsbeispiel näher erläutert; es zeigen:

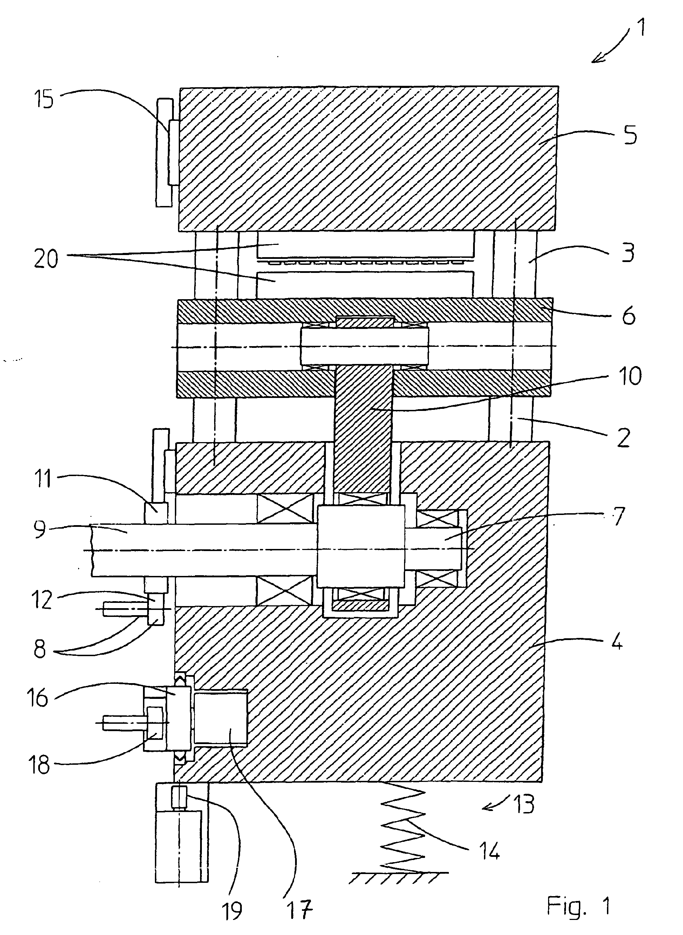

- Fig. 1: einen Längsschnitt durch eine erfindungsgemäße Arbeitsstation,
- Fig. 2: eine Rückansicht der Arbeitsstation aus Fig. 1, dargestellt in der abgesenkten Position,
- Fig. 3: eine der Fig. 2 entsprechende Darstellung mit den mittels eines Doppelhubes geschlossenen Werkzeugen,
- Fig. 4: eine der Fig. 2 entsprechende Darstellung mit geöffnetem Werkzeug und angehobenem Stationsrahmen, und
- Fig. 5: eine der Fig. 2 entsprechende Darstellung mit geöffnetem Werkzeug und auf eine Zwischenposition abgesenktem Stationsrahmen.

In der Zeichnung dargestellt ist eine Arbeitsstation 1, die einen Stationsrahmen 2 aufweist, in dem auf Führungssäulen 3 eine Sockeltraverse 4 sowie eine Deckeltraverse 5 angeordnet sind. Zwischen der Sockeltraverse 4 und der Deckeltraverse 5 ist ein mittels eines im Stationsrahmen 2 angeordneten Antriebes 7 höhenverstellbarer Hubtisch 6 gelagert, wobei der Stationsrahmen 2 mit der Sockeltraverse 4, der Deckeltraverse 5 und dem Hubtisch 6 mittels des Antriebes 7 gegenüber einem stationären Stationsgestell 8 höhenverstellbar ist. Der Antrieb 7 umfasst dabei eine Exzenterwelle 9, auf der eine den Hubtisch 6 tragende Pleuelstange 10 angeordnet ist. Die Exzenterwelle 9 ist in dem in der Zeichnung dargestellten Ausführungsbeispiel in der Sockeltraverse 4 gelagert, wobei die Exzenterwelle 9 eine Kurvenscheibe 11 trägt, die gegenüber dem Stationsgestell 7 abgestützt ist, wobei die Kurvenscheibe 11 so geformt ist, dass die Hubbewegungen des Hubtisches 6 und des Stationrahmens 2 gegenläufig sind. Die Kurvenscheibe 11 liegt auf einer Stützrolle 12 auf, die dem Stationsgestell 8 zugeordnet ist.

Zur einfacheren Verstellung des Stationsrahmens 2 gegenüber dem Stationsgestell 18 ist dem Stationsrahmen 2 ein Gewichtsausgleich 13 zugeordnet, der bei dem in der Zeichnung dargestellten Ausführungsbeispiel durch eine mechanische Feder 14 symbolisiert ist, der gleichwohl aber auch durch eine pneumatische oder hydraulische Feder oder durch ein Gegengewicht realisiert sein kann.

Zwischem dem Stationsgestell 8 und dem Stationsrahmen 2 ist eine Linearführung 15 ausgebildet, die vierfach vorgesehen ist, wobei jeweils zwei Linearführungen 15 der Deckeltraverse 5 und der Sockeltraverse 4 sowie entsprechenden Stellen des Stationsgestells 8 zugeordnet sind.

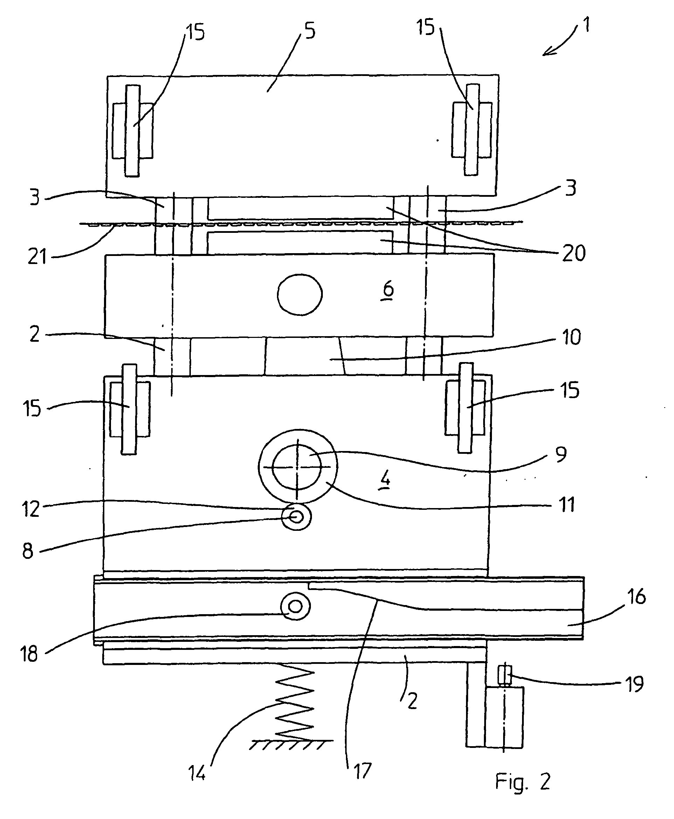

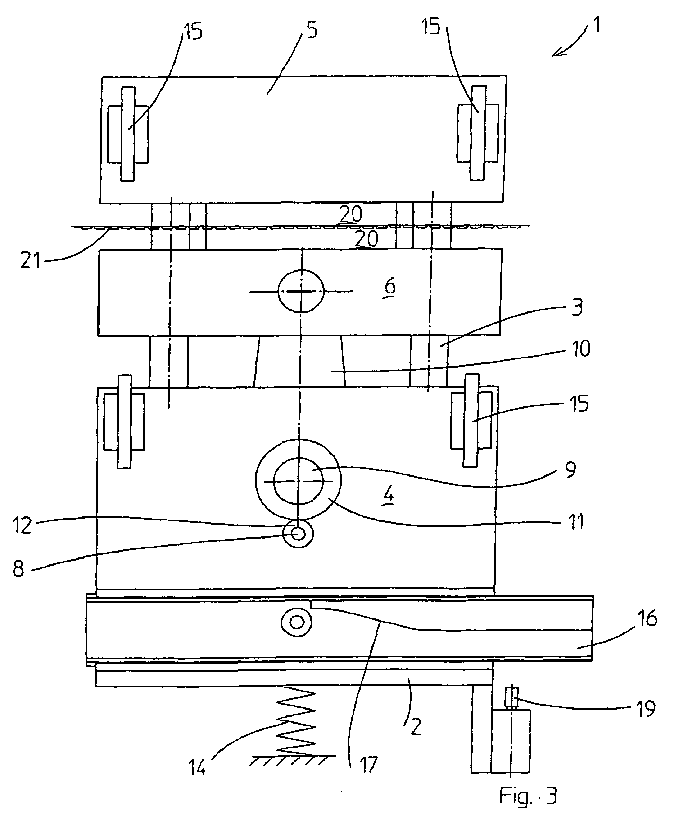

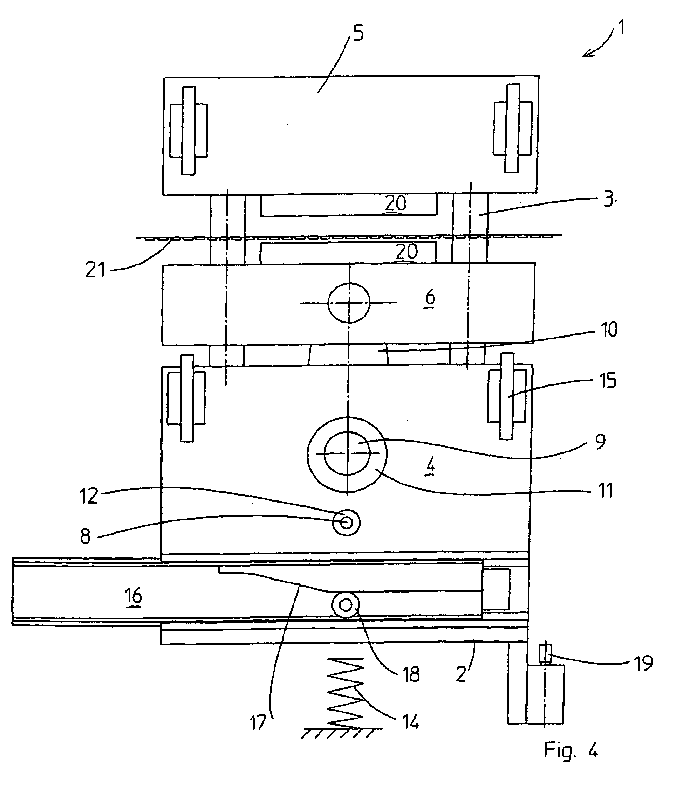

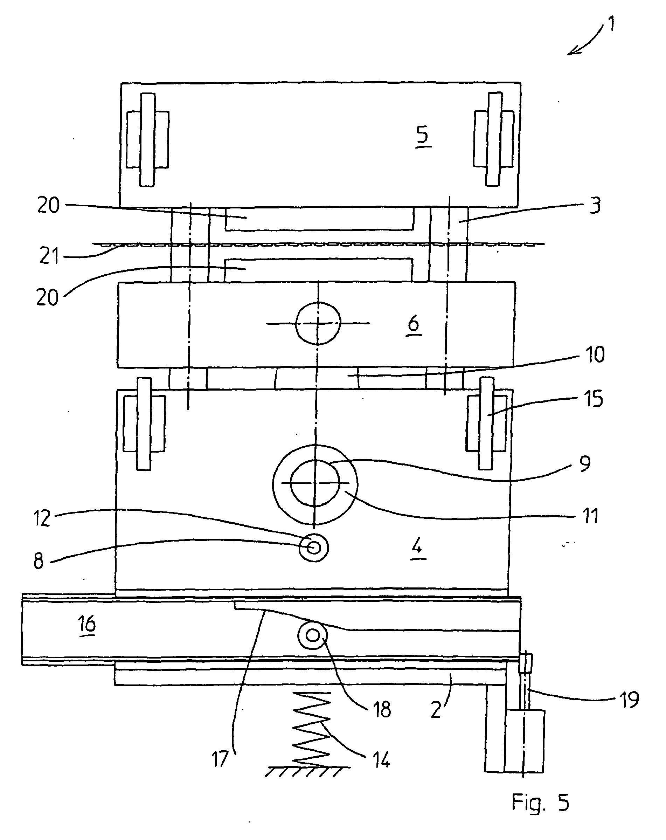

Die Figuren 2 bis 5 lassen erkennen, dass dem Stationsrahmen 2 ein horizontal linear verstellbarer Kurventräger 16 zugeordnet ist, der eine geneigt zur Horizontalen verlaufende Steuerkurve 17 aufweist, die auf einer in dem Stationsgestell 8 gelagerten Kurvenrolle 18 abgestützt ist; die Verstellung des Kurventrägers 16 wird mittels eines Antriebes realisiert, der durch einen Pneumatik- oder Hydraulikzylinder oder einen Linearmotor gebildet sein kann. Dem Kurventräger 16 ist ein Anschlagbolzen 19 zugeordnet, der reversibel in den Verschiebeweg des Kurventrägers 16 verstellt werden kann, um diesen Verschiebeweg zu begrenzen. Für eine variable Begrenzung des Verschiebeweges kann der Anschlagbolzen 19 mehrfach vorgesehen sein in einer längs des Verschiebeweges verteilten Anordnung oder der Anschlagbolzen 19 selber ist längs des Verschiebeweges verstellbar.

Mit einer Arbeitsstation 1 eines derartigen Aufbaus kann sehr flexibel auf die unterschiedlichen Anforderungen beim Betrieb der Arbeitsstation 1 reagiert werden, wobei während eines normalen Arbeitstaktes ein Doppelhub ausgeführt wird von dem Hubtisch 6 und dem Stationsrahmen 2, der das Schließen der Werkzeuge 20 bewirkt. Dabei ist zu beachten, dass keine Verlagerung des Niveaus der zwischen den Werkzeugen 20 hindurch geführten Folien 21 stattfindet. Dieses Folienniveau wird auch beibehalten, wenn die Werkzeuge 20 in der Arbeitsstation 1 geöffnet sind, so dass die Folie 21 beim Transport nicht mit den Werkzeugen 20 in Berührung kommt. Dieser Doppelhub wird erzielt ohne einen zweiten Hubtisch und ohne einen zweiten Antrieb verwenden zu müssen. Der linear verstellbare Kurzenträger 16 realisiert mit dem Anschlagbolzen 19 einen Vielfachhub des Stationsrahmens 2, durch den negative Auswirkungen, wie zum Beispiel die Wärmeabstrahlung eines heißen Werkzeugs 20 auf die mit Produkten befüllte Folie 21 bei einem Maschinenstopiop, verhindert werden kann. Auch werden für bestimmte Betriebszustände der Arbeitsstation 1 Zwischenpositionen bereitgestellt, wobei die vielfachen Hubmöglichkeiten entlang derselben Führung erfolgen. Es liegt ein spielfreier, verformungssteifer mechanischer Stationsaufbau vor.

## Patentansprüche

1. Arbeitsstation mit einem Stationsrahmen (2), in dem auf Führungssäulen (3) eine Sockeltraverse (4) sowie eine Deckeltraverse (5) angeordnet sind, wobei zwischen der Sockeltraverse (4) und der Deckeltraverse (5) ein mittels eines im Stationsrahmen (2) angeordneten Antriebs (7) höhenverstellbarer Hubtisch (6) gelagert ist und der Stationsrahmen (2) mit der Sockeltraverse (4), der Deckeltraverse (5) und dem Hubtisch (6) mittels des Antriebs (7) gegenüber einem stationären Stationsgestell (8) höhenverstellbar ist,
**dadurch gekennzeichnet, dass**
dem Stationsrahmen (2) ein horizontal linear verstellbarer Kurventräger (16) zugeordnet ist, der eine geneigt zur Horizontalen verlaufende Steuerkurve (17) aufweist, die auf einer im Stationsgestell (8) gelagerten Kurvenrolle (18) abgestützt ist.

2. Arbeitsstation nach Anspruch 1, **dadurch gekennzeichnet, dass** der Antrieb (7) eine Exzenterwelle (9) umfasst, auf der eine den Hubtisch (6) tragende Pleuelstange (10) angeordnet ist.

3. Arbeitsstation nach Anspruch 2, **dadurch gekennzeichnet, dass** die Exzenterwelle (9) in einer der beiden Sockeltraverse (4) oder Deckeltraverse (5) gelagert ist, und dass die Exzenterwelle (9) eine Kurvenscheibe (11) trägt, die gegenüber dem Stationsgestell (8) abgestützt ist.

4. Arbeitsstation nach Anspruch 3, **dadurch gekennzeichnet, dass** die Kurvenscheibe (11) so geformt ist, dass die Hubbewegung des Hubtisches (6) und des Stationsrahmens (2) gegenläufig ist.

5. Arbeitsstation nach Anspruch 3 oder 4, **dadurch gekennzeichnet, dass** dem Stationsgestell (8) eine Stützrolle (12) zugeordnet ist, auf der die Kurvenscheibe (11) aufliegt.

6. Arbeitsstation nach einem der Ansprüche 1 bis 5, **dadurch gekennzeichnet, dass** dem Stationsrahmen (2) ein Gewichtsausgleich (13) zugeordnet ist.

7. Arbeitsstation nach Anspruch 6, **dadurch gekennzeichnet, dass** der Gewichtsausgleich (13) durch eine Feder (14), vorzugsweise mechanische oder pneumatische oder hydraulische Feder, gebildet ist.

8. Arbeitsstation nach Anspruch 6, **dadurch gekennzeichnet, dass** der Gewichtsausgleich (13) durch ein Gegengewicht gebildet ist.

9. Arbeitsstation nach einem der Ansprüche 1 bis 8, **dadurch gekennzeichnet, dass** zwischen dem Stationsgestell (8) und dem Stationsrahmen (2) eine Linearführung (15) ausgebildet ist.

10. Arbeitsstation nach Anspruch 9, **dadurch gekennzeichnet, dass** die Linearführung (15) vierfach vorgesehen und paarweise der Deckeltraverse (5) und der Sockeltraverse (4) sowie entsprechenden Stellen des Stationsgestells (8) zugeordnet ist.

11. Arbeitsstation nach einem der vorangehenden Ansprüch, **dadurch gekennzeichnet, dass** zur Verstellung des Kurventrägers (16) ein Pneumatikzylinder oder Hydraulikzylinder oder Linearmotor vorgesehen ist.

12. Arbeitsstation nach einem der vorangehenden Ansprüche, **dadurch gekennzeichnet, dass** ein Anschlagbolzen (19) vorgesehen ist, der zur Begrenzung des Verschiebeweges des Kurventrägers (16) reversibel verstellbar ist.

13. Arbeitsstation nach Anspruch 12, **dadurch gekennzeichnet, dass** der Anschlagbolzen (19) mehrfach vorgesehen ist in einer längs des Verschiebeweges verteilten Anordnung.

14. Arbeitsstation nach Anspruch 12, **dadurch gekennzeichnet, dass** der Anschlagbolzen (19) längs des Verschiebeweges verstellbar ist.

## Claims

1. Workstation comprising a station frame (2), in which a base traverse (4) and a cover traverse (5) are arranged on guide columns (3), a lifting table (6) which is vertically adjustable by means of a drive (7) which is arranged in the station frame (2) being mounted between the base traverse (4) and the cover traverse (5), and the station frame (2) comprising the base traverse (4), the cover traverse (5) and the lifting table (6) being vertically adjustable by means of the drive (7) in relation to a stationary station support (8), **characterised in that** a horizontally linearly adjustable cam carrier (16) is assigned to the station frame (2), said carrier comprising a control cam (17) which extends in an inclined manner towards the horizontal, said control cam being supported on a cam roller (18) which is mounted in the station support (8).

2. Workstation according to claim 1, **characterised in that** the drive (7) comprises an eccentric shaft (9), on which a connecting rod (10) which carries the lifting table (6) is arranged.

3. Workstation according to claim 2, **characterised in that** the eccentric shaft (9) is mounted in either the base traverse (4) or the cover traverse (5), and **in that** the eccentric shaft (9) carries a cam disc (11) which is supported relative to the station support (8).

4. Workstation according to claim 3, **characterised in that** the cam disc (11) is formed such that the lifting movements of the lifting table (6) and the station frame (2) are opposed.

5. Workstation according to either claim 3 or claim 4, **characterised in that** a support roller (12) is assigned to the station support (8), on which roller the cam disc (11) rests.

6. Workstation according to any of claims 1 to 5, **characterised in that** a weight counterbalance (13) is assigned to the station frame (2).

7. Workstation according to claim 6, **characterised in that** the weight counterbalance (13) is formed by a spring (14), preferably a mechanical, pneumatic or hydraulic spring.

8. Workstation according to claim 6, **characterised in that** the weight counterbalance (13) is formed by a counterweight.

9. Workstation according to any of claims 1 to 8, **characterised in that** a linear guide (15) is formed between the station support (8) and the station frame (2).

10. Workstation according to claim 9, **characterised in that** four linear guides (15) are provided, and are assigned in pairs to the cover traverse (5) and the base traverse (4), as well as to corresponding points of the station support (8).

11. Workstation according to any of the preceding claims, **characterised in that** a pneumatic cylinder, a hydraulic cylinder or a linear motor is provided for adjusting the cam carrier (16).

12. Workstation according to any of the preceding claims, **characterised in that** a stop pin (19) is provided which is reversibly adjustable for delimiting the displacement path of the cam carrier (16).

13. Workstation according to claim 12, **characterised in that** the stop pin (19) is provided multiple times in an arrangement which is distributed along the displacement path.

14. Workstation according to claim 12, **characterised in that** the stop pin (19) is adjustable along the displacement path.

## Revendications

1. Poste de travail comprenant un châssis de poste (2), dans lequel sont disposées sur des colonnes de guidage (3) une traverse de socle (4) ainsi qu'une traverse de couvercle (5), une table élévatrice (6), réglable en hauteur au moyen d'un entraînement (7) disposé dans le châssis de poste (2), étant montée entre la traverse de socle (4) et la traverse de couvercle (5), et le châssis de poste (2), avec la traverse de socle (4), la traverse de couvercle (5) et la table élévatrice (6), étant réglable en hauteur au moyen de l'entraînement (7) par rapport à un bâti de poste (8) stationnaire,
**caractérisé en ce que**
un support de came (16), réglable linéairement dans la direction horizontale, est associé au châssis de poste (2), lequel support présente une came de commande (17), inclinée par rapport à l'horizontale et supportée sur un galet de came (18) monté dans le bâti de poste (8).

2. Poste de travail selon la revendication 1, **caractérisé en ce que** l'entraînement (7) comprend un arbre à excentrique (9), sur lequel est disposée une bielle (10) qui supporte la table élévatrice (6).

3. Poste de travail selon la revendication 2, **caractérisé en ce que** l'arbre à excentrique (9) est monté dans l'une des deux traverse de socle (4) ou traverse de couvercle (5), et que l'arbre à excentrique (9) supporte une came (11), en appui par rapport au bâti de poste (8).

4. Poste de travail selon la revendication 3, **caractérisé en ce que** la came (11) est formée de sorte que le mouvement de course de la table élévatrice (6) et du châssis de poste (2) est de sens contraire.

5. Poste de travail selon l'une des revendications 3 et 4, **caractérisé en ce qu'**un galet d`appui (12), sur lequel s'applique la came (11), est associé au bâti de poste (8).

6. Poste de travail selon l'une des revendications 1 à 5, **caractérisé en ce qu'**un équilibrage de poids (13) est associé au châssis de poste (2).

7. Poste de travail selon la revendication 6, **caractérisé en ce que** l'équilibrage de poids (13) est formé par un ressort (14), de préférence un ressort mécanique ou pneumatique ou hydraulique.

8. Poste de travail selon la revendication 6, **caractérisé en ce que** l'équilibrage de poids (13) est formé par un contrepoids.

9. Poste de travail selon l'une des revendications 1 à 8, **caractérisé en ce qu'**un guidage linéaire (15) est réalisé entre le bâti de poste (8) et le châssis de poste (2).

10. Poste de travail selon la revendication 9, **caractérisé en ce que** le guidage linéaire (15) est prévu en quadruple et est associé par paire à la traverse de couvercle (5) et à la traverse de socle (4), ainsi qu'à des endroits correspondants du bâti de poste (8).

11. Poste de travail selon l'une des revendications précédentes, **caractérisé en ce qu'**il est prévu un cylindre pneumatique ou un cylindre hydraulique ou un moteur linéaire pour le réglage du support de came (16).

12. Poste de travail selon l'une des revendications précédentes, **caractérisé en ce qu'**il est prévu un axe de butée (19), pourvu d'une possibilité d'ajustement réversible pour limiter la course de déplacement du support de came (16).

13. Poste de travail selon la revendication 12, **caractérisé en ce que** l'axe de butée (19) est prévu en multiple dans un agencement réparti le long de la course de déplacement.

14. Poste de travail selon la revendication 12, **caractérisé en ce que** l'axe de butée (13) est réglable le long de la course de déplacement.
